# EUROPÄISCHE PATENTANMELDUNG

(11) **EP 4 266 557 A1**
(43) Veröffentlichungstag der Anmeldung: **25.10.2023**
(21) Anmeldenummer: 22169242.9
(22) Anmeldetag: 21.04.2022
(51) Int. Cl.: H02K 11/25, G01K 1/143

(54) **STATORVORRICHTUNG FÜR EINE ELEKTRISCHE MASCHINE**

(71) Anmelder: Valeo eAutomotive Germany GmbH, 91056 Erlangen (DE)
(72) Erfinder: Noe, Benedikt, 97616 C/o VSeA, Siemensstr. 15, Bad Neustadt a.d.Saale (DE); Finger-Albert, Christian, 97616 C/o VSeA, Siemensstr. 15, Bad Neustadt a.d.Saale (DE); Wolf, Stefan, 97616 C/o VSeA, Siemensstr. 15, Bad Neustadt a.d.Saale (DE)
(74) Vertreter: Valeo Powertrain Systems

(57) **Zusammenfassung**

Statorvorrichtung (2) für eine elektrische Maschine (1), aufweisend:
- einen Statorkern (5), der eine Längsachse (6) und eine axiale Stirnseite (7) aufweist;
- eine Statorwicklung (9), die an der Stirnseite (7) einen sich aus dem Statorkern (5) heraus erstreckenden Wicklungskopf (10) mit einer ersten Radialseite (12) und einer der ersten Radialseite (12) gegenüberliegenden zweiten Radialseite (13) ausbildet;
- einen Temperatursensor (14), der dazu eingerichtet ist, eine Temperatur an der ersten Radialseite (12) zu erfassen; und
- eine am Wicklungskopf (10) angeordnete Befestigungsvorrichtung (15), die
- einen ersten Schenkel (27), der an der ersten Radialseite (12) angeordnet ist und den Temperatursensor (14) haltert,
- einen zweiten Schenkel (28), der an der zweiten Radialseite (13) angeordnet ist, und
- einen Steg (29), der sich radial entlang des Wicklungskopfs (10) erstreckt und den ersten Schenkel (27) und den zweiten Schenkel (28) verbindet,
aufweist;
wobei der erste Schenkel (27) derart elastisch verformbar ausgebildet ist, dass er eine den Temperatursensor (14) an die erste Radialseite (12) drückende Rückstellkraft ausübt.

## Beschreibung

Die vorliegende Erfindung betrifft eine Statorvorrichtung für eine elektrische Maschine. Daneben betrifft die Erfindung eine elektrische Maschine für ein Fahrzeug.

Bei elektrischen Maschinen besteht der Bedarf, die Temperatur einer Statorvorrichtung zu überwachen. Dabei wird eine Temperatur im Bereich eines aus einem Statorkern herausragenden Wicklungskopfs erfasst. Die so erfasste Temperatur kann beispielsweise der Einleitung von Schutzmaßnahmen beim Betrieb der elektrischen Maschine dienen, um beispielsweise eine Überhitzung zu vermeiden.

Es wurde bereits vorgeschlagen, einen Temperatursensor mittels einer Federklemme an einem Neutralleiter des Stators zu befestigen und die Temperatur des Neutralleiters zu messen. So offenbart die DE 10 2017 222 543 A1 eine elektrische Maschine mit einem Stator. Auf einem Leiterende eines Neutralleiters des Stators ist eine Federklemme aufgesteckt und mit dem Leiterende verklemmt. Ein Temperatursensor ist in einer Sensorhalterung der Federklemme angeordnet. Die Sensorhalterung ist an den Neutralleiter angepresst.

Eine Befestigung des Temperatursensors an einem Neutralleiter ist zwar einfach durchzuführen. Allerdings ist dieser oft weit vom Wicklungskopf entfernt, sodass die gemessene Temperatur nicht immer der tatsächlichen Temperatur des Wicklungskopfs entspricht.

Der Erfindung liegt mithin die Aufgabe zugrunde, eine verbesserte Möglichkeit zur Temperaturmessung im Bereich eines Wicklungskopfs einer Statorvorrichtung für eine elektrische Maschine anzugeben.

Diese Aufgabe wird erfindungsgemäß gelöst durch eine Statorvorrichtung für eine elektrische Maschine, aufweisend: einen Statorkern, der eine Längsachse und eine axiale Stirnseite aufweist; eine Statorwicklung, die an der Stirnseite einen sich aus dem Statorkern heraus erstreckenden Wicklungskopf mit einer ersten Radialseite und einer der ersten Radialseite gegenüberliegenden zweiten Radialseite ausbildet; einen Temperatursensor, der dazu eingerichtet ist, eine Temperatur an der ersten Radialseite zu erfassen; und eine am Wicklungskopf angeordnete Befestigungsvorrichtung, die einen ersten Schenkel, der an der ersten Radialseite angeordnet ist und den Temperatursensor haltert, einen zweiten Schenkel, der an der zweiten Radialseite angeordnet ist, und einen Steg, der sich radial entlang des Wicklungskopfs erstreckt und den ersten Schenkel und den zweiten Schenkel verbindet, aufweist; wobei der erste Schenkel derart elastisch verformbar ausgebildet ist, dass er eine den Temperatursensor an die erste Radialseite drückende Rückstellkraft ausübt.

Die erfindungsgemäße Statorvorrichtung für eine elektrische Maschine weist einen Statorkern auf. Der Statorkern weist eine Längsachse und eine axiale Stirnseite auf. Die Statorvorrichtung weist ferner eine Statorwicklung auf. Die Statorwicklung bildet an der Stirnseite einen Wicklungskopf aus. Der Wicklungskopf erstreckt sich aus dem Statorkern heraus. Der Wicklungskopf weist eine erste Radialseite und eine zweiten Radialseite auf. Die zweite Radialseite liegt der ersten Radialseite gegenüber. Die Statorvorrichtung weist ferner einen Temperatursensor auf. Der Temperatursensor ist dazu eingerichtet, eine Temperatur an der ersten Radialseite zu erfassen. Die Statorvorrichtung weist ferner eine Befestigungsvorrichtung auf. Die Befestigungsvorrichtung ist am Wicklungskopf angeordnet. Die Befestigungsvorrichtung weist einen ersten Schenkel auf. Der erste Schenkel ist an der ersten Radialseite angeordnet. Der erste Schenkel haltert den Temperatursensor. Die Befestigungsvorrichtung weist ferner einen zweiten Schenkel auf. Der zweite Schenkel ist an der zweiten Radialseite angeordnet. Die Befestigungsvorrichtung weist ferner einen Steg auf. Der Steg erstreckt sich radial entlang des Wicklungskopfs. Der Steg verbindet den ersten Schenkel und den zweiten Schenkel. Der erste Schenkel ist derart elastisch verformbar ausgebildet ist, dass er eine Rückstellkraft ausübt. Die Rückstellkraft drückt den Temperatursensor an die erste Radialseite.

Bei der erfindungsgemäßen Statorvorrichtung wird der Temperatursensor in vorteilhafter Weise durch die Rückstellkraft an die erste Radialseite gedrückt, um dort eine Temperatur des Wicklungskopfs erfassen zu können. Dazu umgreift die Befestigungsvorrichtung mit ihren beiden Schenkeln den Wicklungskopf, um durch die elastische Verformung zumindest des ersten Schenkels die Rückstellkraft ausüben zu können. Die Befestigungsvorrichtung der erfindungsgemäßen Statorvorrichtung lässt sich so einfach durch eine Axialbewegung auf den Wicklungskopf aufstecken. Anstelle einer konventionellen indirekten Messung der Temperatur des Wicklungskopfs an einem mechanisch mit diesem verbundenen Neutralleiter ermöglich die erfindungsgemäße Statorvorrichtung mit Vorteil eine genauere Temperaturerfassung, indem der Temperatursensor auf den Wicklungskopf selbst gedrückt wird.

Die Begriffe "axial", "Axialrichtung", "radial", "Radialrichtung", "Radialseite", "Umfangsrichtung" etc. beziehen sich insbesondere auf die Längsachse des Statorkerns. Bevorzugt liegt die erste Radialseite radial innen und die zweite Radialseite radial außen. Alternativ ist es aber auch möglich, dass die erste Radialseite radial außen liegt und die zweite Radialseite radial innen liegt.

Der Statorkern der erfindungsgemäßen Statorvorrichtung ist typischerweise aus einer Vielzahl von axial geschichtet angeordneten und/oder gegeneinander elektrisch isolierten Einzelblechen ausgebildet. Der Statorkern kann insofern auch als Statorblechpaket aufgefasst werden. Der Statorkern kann eine Vielzahl von in Umfangsrichtung angeordneten und sich jeweils axial durch den Statorkern erstreckenden Nuten aufweisen, in denen die Statorwicklung abschnittsweise aufgenommen ist. In bevorzugter Ausgestaltung ist die Befestigungsvorrichtung kraftschlüssig am Wicklungskopf befestigt.

Der Temperatursensor weist vorzugsweise einen Fühler auf. Der Fühler ist vorzugsweise ein temperaturabhängiger Widerstand, insbesondere ein NTC-Widerstand. Der Fühler kann auch eine wärmeleitfähige Einfassung, beispielsweise eine Vergussmasse oder einen Strumpfschlauch, aufweisen. In diesem Fall erfolgt die Temperaturerfassung durch die Einfassung hindurch. Der Temperatursensor kann ferner mit dem Fühler verbundene Sensorleitungen aufweisen, über die vom Fühler erzeugte Sensorsignale übertragbar sind. Vorzugsweise weist der Steg eine Durchgangsöffnung auf, durch welche die Sensorleitungen durchgeführt sind. Dadurch kann der Temperatursensor zusätzlich an der Befestigungsvorrichtung gehaltert sein.

Der erste Schenkel kann ein Halterelement oder mehrere Halterelemente zum Haltern des Temperatursensors aufweisen. Das oder eines der Haltelemente kann den Temperatursensor, insbesondere an einem dem Statorkern zugewandte Ende des ersten Schenkels, umgreifen. Zwei der Halterelemente können als zum zweiten Schenkel hinweisende Vorsprünge, die insbesondere von einem Rand des ersten Schenkels abstehen, ausgebildet sein, um eine Bewegung des Temperatursensors quer zum ersten Schenkel zu hemmen. Der erste Schenkel kann zusätzlich einen zum Wicklungskopf weisenden Vorsprung aufweisen, der den Temperatursensor, insbesondere im Bereich des Fühlers, zum Wicklungskopf hinbiegt.

Die Befestigungsvorrichtung kann aus einem Metall, vorzugsweise aus Stahl, oder aus Kunststoff, vorzugsweise einem Thermoplast, gebildet sein.

Bei der erfindungsgemäßen Statorvorrichtung ist bevorzugt vorgesehen, dass sich der erste Schenkel weiter in Umfangsrichtung erstreckt als der zweite Schenkel. Dadurch kann sich die Auflagefläche des Temperatursensors über einen größeren Bereich entlang der Umfangsrichtung erstrecken.

Gemäß einer bevorzugten Ausgestaltungsvariante der erfindungsgemäßen Statorvorrichtung steht der erste Schenkel winklig vom Steg ab. Dies ermöglicht insbesondere eine schräge Anordnung des ersten Schenkels an der ersten Radialseite. Nach einer alternativen Ausgestaltungsvariante weist der erste Schenkel einen ersten Schenkelabschnitt, der, insbesondere axial, vom Steg absteht, und einen sich an den ersten Schenkelabschnitt anschließenden zweiten Schenkelabschnitt, der sich weiter in Umfangsrichtung erstreckt als der erste Schenkelabschnitt, auf.

Bei dieser Ausgestaltungsvariante wird ebenfalls eine schräge Anordnung an der ersten Radialseite ermöglicht. Durch die Länge des ersten Schenkelabschnitts kann dabei die genaue Axialposition vorgegeben werden, ab welcher die schräge Anordnung beginnt. Nach einer weiteren alternativen Ausgestaltungsvariante verläuft der erste Schenkel in Axialrichtung vom Steg abstehend in Richtung des Statorkerns. Dabei können der erste Schenkel und der zweite Schenkel im Wesentlichen parallel verlaufen.

Bevorzugt verläuft der erste Schenkel bezüglich der Längsachse um einen Winkel zwischen 20° und 70°, bevorzugt zwischen 30° und 60°, geneigt entlang der ersten Radialseite.

Der zweite Schenkel steht bei der erfindungsgemäßen Statorvorrichtung bevorzugt gerade in Axialrichtung vom Steg ab.

In bevorzugter Weiterbildung der erfindungsgemäßen Statorvorrichtung ist vorgesehen, dass die Befestigungsvorrichtung eine Zentriervorrichtung aufweist, die dazu eingerichtet ist, den Wicklungskopf abschnittsweise zu umgreifen, um eine Bewegung der Befestigungsvorrichtung in Umfangsrichtung zu hemmen. Die Zentriervorrichtung ermöglicht eine stabile Positionierung des Temperatursensors am Wicklungskopf, indem ein tangentiales Verrutschen der Befestigungsvorrichtung und damit auch des Temperatursensors vermieden wird. Die Zentriervorrichtung kann insbesondere gabelförmig ausgebildet sein. Bevorzugt umgreift die Zentriervorrichtung einen aus einer oder mehreren der Nuten hervorragenden Abschnitt des Wicklungskopfs.

Die Zentriervorrichtung ist besonders bevorzugt am zweiten Schenkel, insbesondere an einem dem Statorkern zugewandten Ende des zweiten Schenkels, angeordnet. Die Zentriervorrichtung kann an den Statorkern anschlagen, um eine Axialbewegung der Befestigungsvorrichtung zu hemmen.

Bei der erfindungsgemäßen Statorvorrichtung kann des Weiteren vorgesehen sein, dass der zweite Schenkel derart elastisch verformbar ausgebildet ist, dass er eine radial auf den Wicklungskopf wirkende Rückstellkraft ausübt.

Die erfindungsgemäße Statorvorrichtung kann ferner einen Lagerschild aufweisen. Dabei ist es vorteilhaft, dass die Befestigungsvorrichtung ein am Lagerschild abgestütztes Lagerelement aufweist, das derart elastisch verformbar ist, dass es eine zum Statorkern hin gerichtete Rückstellkraft auf die Befestigungsvorrichtung ausübt. Dies ermöglichst eine Montage der Befestigungsvorrichtung am Wicklungskopf vor der Anordnung des Lagerschilds. Nach Montage des Lagerschilds fixiert dieser die Befestigungsvorrichtung axial. Durch die elastische Verformung werden einerseits Fertigungstoleranzen ausgeglichen. Andererseits dient die Rückstellkraft der sicheren Positionierung der Befestigungsvorrichtung und des durch sie gehalterten Temperatursensors. Das Lagerelement kann beispielsweise nach Art einer Feder, insbesondere einer Blattfeder, ausgebildet sein.

Um eine gleichmäßige Verteilung der Rückstellkraft zu erzielen, ist das Lagerelement vorzugsweise durch zwei winklig vom Steg abstehende Flügel ausgebildet. Die Flügel erstrecken sich insbesondere in von den Schenkeln wegweisende Richtung. Die Flügel können entweder in Umfangsrichtung oder in Radialrichtung vom Steg wegweisend abstehen.

In bevorzugter Ausgestaltung ist vorgesehen, dass der erste Schenkel gegenüber der ersten Radialseite in einem spitzen Winkel geneigt verläuft und die vom Lagerelement ausgeübte Rückstellkraft die vom ersten Schenkel ausgeübte Rückstellkraft verstärkt. Alternativ oder zusätzlich ist vorgesehen, dass der zweite Schenkel gegenüber der zweiten Radialseite in einem spitzen Winkel geneigt verläuft. Dann kann die vom Lagerelement ausgeübte Rückstellkraft die vom zweiten Schenkel ausgeübte Rückstellkraft verstärken. Der Effekt der Verstärkung der jeweiligen Rückstellkräfte der Schenkel tritt besonders ausgeprägt auf, wenn die Flügel in Radialrichtung vom Steg wegweisend abstehen.

Die erfindungsgemäß vorgesehene Befestigungsvorrichtung lässt sich grundsätzlich bei beliebigen Arten von Statorwicklungen, insbesondere auch bei Runddrahtwicklungen, einsetzen. Besonders vorteilhaft ist es indes, wenn die Statorwicklung aus einer Vielzahl von Formleitern gebildet ist, die jeweils einen ersten Beinabschnitt, einen zweiten Beinabschnitt und einen Verbindungabschnitt aufweisen, wobei sich der erste Beinabschnitt und der zweite Beinabschnitt in Axialrichtung an verschiedenen Winkelpositionen in Umfangsrichtung durch den Statorkern erstrecken und der Verbindungsabschnitt die Beinabschnitte an der Stirnseite außerhalb des Statorkerns verbindet. Eine derartige Statorwicklung kann auch als Haarnadelwicklung (engl. hair pin winding) bezeichnet werden.

Bevorzugt ist vorgesehen, dass jeder Verbindungsabschnitt zwei schräge Abschnitte, die sich in einem Scheitel des Verbindungsabschnitts treffen, jeweils mit einem der Beinabschnitte verbunden sind und jeweils ihren axialen Abstand zum Statorkern vom Beinabschnitt zum Scheitel hin vergrößern, aufweist, wobei der Temperatursensor und/oder der erste Schenkel entlang eines der schrägen Abschnitte des Verbindungsabschnitts eines der Formleiter verläuft oder verlaufen. Die Lage des Temperatursensors kann so optimal an die Geometrie der Formleiter angepasst werden.

Besonders vorteilhaft ist es ferner, wenn sich die Beinabschnitte an der Stirnseite in Axialrichtung aus dem Statorkern heraus erstrecken und die Zentriervorrichtung einen der Beinabschnitte eines oder mehrerer der Formleiter umgreift.

Die der Erfindung zugrunde liegende Aufgabe wird ferner gelöst durch eine elektrische Maschine für ein Fahrzeug, aufweisend eine erfindungsgemäße Statorvorrichtung und einen drehbar bezüglich des Statorkerns gelagerten Rotor.

Die elektrische Maschine kann als, insbesondere permanent oder elektrisch erregte, Synchronmaschine ausgebildet sein. Alternativ ist die elektrische Maschine eine Asynchronmaschine. Vorzugsweise ist die elektrische Maschine ein Elektromotor.

Die der Erfindung zugrunde liegende Aufgabe wird ferner gelöst durch einen elektrischen Antrieb, aufweisend eine erfindungsgemäße elektrische Maschine, einen Stromrichter, der eine für die elektrische Maschine vorgesehene Betriebsspannung erzeugt.

Die der Erfindung zugrunde liegende Aufgabe wird ferner gelöst durch ein Fahrzeug, aufweisend Räder zum Bewegen des Fahrzeugs und eine erfindungsgemäße elektrische Maschine, wobei die elektrische Maschine eingerichtet ist, wenigstens eines der Räder des Fahrzeugs zumindest indirekt anzutreiben.

Das erfindungsgemäße Fahrzeug ist z. B. ein reines Elektrofahrzeug bzw. ein batterieelektrisches Fahrzeug (BEV). Das erfindungsgemäße Fahrzeug kann auch ein Hybridfahrzeug sein, also neben der elektrischen Maschine noch einen weiteren Motor, insbesondere einen Verbrennungsmotor umfassen.

Die als Elektromotor ausgebildete elektrische Maschine des Fahrzeugs kann das wenigstens eine Rad direkt oder über ein zwischengeschaltetes Getriebe antreiben. Das Fahrzeug kann eine mit dem wenigstens einen Rad gekoppelte Achse aufweisen, die die als Elektromotor ausgebildete elektrische rotierende Maschine des Fahrzeugs direkt oder indirekt antreibt.

Weitere Vorteile und Einzelheiten der vorliegenden Erfindung ergeben sich aus den im Folgenden beschriebenen Zeichnungen. Diese sind schematische Darstellungen und zeigen:
- Fig. 1: eine Prinzipskizze eines Ausführungsbeispiels der erfindungsgemäßen elektrischen Maschine mit einem ersten Ausführungsbeispiel der erfindungsgemäßen Statorvorrichtung;
- Fig. 2: eine Prinzipskizze eines Formleiters gemäß dem ersten Ausführungsbeispiel der erfindungsgemäßen Statorvorrichtung;
- Fig. 3 u. 4: jeweils eine perspektivische Einzelansicht der Befestigungsvorrichtung und des Temperatursensors gemäß dem ersten Ausführungsbeispiel in einem am Wicklungskopf montierten Zustand;
- Fig. 5: eine Detailansicht des ersten Schenkels und des Temperatursensors gemäß dem ersten Ausführungsbeispiel;
- Fig. 6: eine geschnittene Detailansicht des ersten Schenkels und des Temperatursensors gemäß dem ersten Ausführungsbeispiel;
- Fig. 7: eine Prinzipskizze der Befestigungsvorrichtung gemäß dem ersten Ausführungsbeispiel in einem unmontierten Zustand;
- Fig. 8: eine Prinzipskizze der Befestigungsvorrichtung gemäß dem ersten Ausführungsbeispiel in einem am Wicklungskopf montierten und am Lagerschild abgestützten Zustand;
- Fig. 9 bis 11: jeweils eine perspektivische Ansicht der Statorvorrichtung gemäß dem ersten Ausführungsbeispiel im Bereich der sich im montierten Zustand befindenden Befestigungsvorrichtung;
- Fig. 12: eine Prinzipskizze der Befestigungsvorrichtung gemäß einem zweiten Ausführungsbeispiel der erfindungsgemäßen Statorvorrichtung in einem unmontierten Zustand;
- Fig. 13: eine Prinzipskizze der Befestigungsvorrichtung gemäß dem zweiten Ausführungsbeispiel in einem am Wicklungskopf montierten und am Lagerschild abgestützten Zustand; und
- Fig.14: eine perspektivische Ansicht einer Befestigungsvorrichtung gemäß einem dritten Ausführungsbeispiel der erfindungsgemäßen Statorvorrichtung im montierten Zustand.

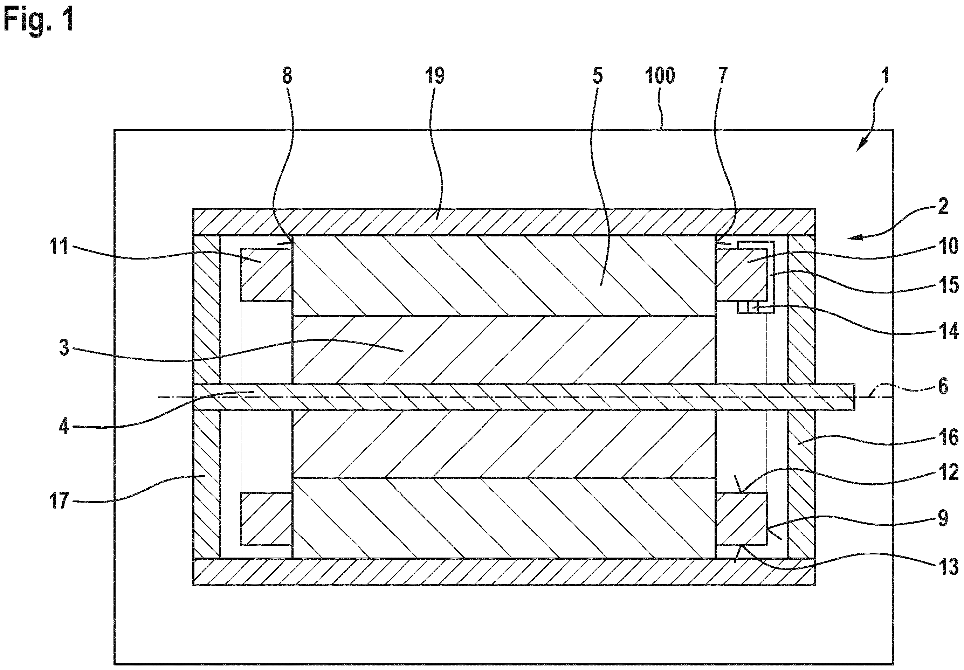

Fig. 1 ist eine Prinzipskizze eines Ausführungsbeispiels einer elektrischen Maschine 1 für ein Fahrzeug 100 mit einem ersten Ausführungsbeispiel einer Statorvorrichtung 2.

Neben der Statorvorrichtung 2 weist die elektrische Maschine einen drehbar in der Statorvorrichtung 2 gelagerten Rotor 3 und eine drehfest mit diesem verbundene Welle 4 auf. Die elektrische Maschine 1 kann als permanent oder elektrisch erregte Synchronmaschine oder als Asynchronmaschine ausgebildet sein und einen Teil eines Antriebsstrangs des Fahrzeugs 100 ausbilden.

Die Statorvorrichtung 2 weist einen Statorkern 5, der eine Längsachse 6 und eine axiale Stirnseite 7 aufweist, auf. Die Längsachse 6 entspricht dabei einer Drehachse der Welle 4. Der Stirnseite 7 liegt eine weitere axiale Stirnseite 8 gegenüber. Außerdem weist die Statorvorrichtung 2 eine Statorwicklung 9 auf. Die Statorwicklung 9 bildet an der Stirnseite 7 einen Wicklungskopf 10 und an der weiteren Stirnseite 8 einen weiteren Wicklungskopf 11 aus. Der Wicklungskopf 10 weist eine innere erste Radialseite 12 und eine äußere zweite Radialseite 13 auf. Rein schematisch sind in Fig. 1 ein Temperatursensor 14, der dazu eingerichtet ist, eine Temperatur an der ersten Radialseite 12 zu erfassen, und eine am Wicklungskopf 10 angeordnete Befestigungsvorrichtung 15 gezeigt.

Die Statorvorrichtung 2 umfasst darüber hinaus im vorliegenden Ausführungsbeispiel einen auf Seiten der Stirnseite 8 angeordneten Lagerschild 16, der exemplarisch als A-Lagerschild dargestellt ist. Ein weiterer Lagerschild 17, hier ein B-Lagerschild, ist auf Seiten der weiteren Stirnseite 8 vorgesehen. Die Lagerschilde 17, 18 verschießen eine Zylindermantel 19 der Statorvorrichtung 2.

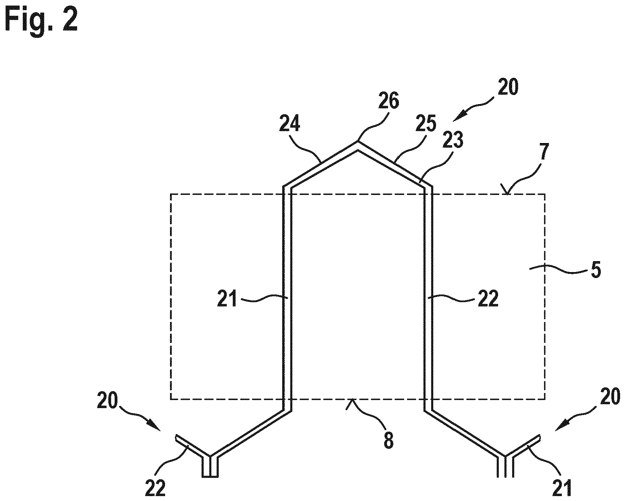

Exemplarisch ist die Statorwicklung 9 als Haarnadelwicklung ausgebildet, was im Folgenden schematisch anhand von Fig. 2, die eine Prinzipskizze eines Formleiters 20 gemäß dem ersten Ausführungsbeispiel der erfindungsgemäßen Statorvorrichtung 2 ist, erläutert wird:
Die Statorwicklung 9 ist aus einer Vielzahl von Formleitern 20 gebildet, die jeweils einen ersten Beinabschnitt 21, einen zweiten Beinabschnitt 22 und einen Verbindungabschnitt 23 aufweisen. Der erste Beinabschnitt 21 und der zweite Beinabschnitt 22 erstecken sich in Axialrichtung an verschiedenen Winkelpositionen in Umfangsrichtung durch den Statorkern 5. Der Verbindungsabschnitt 23 verbindet die Beinabschnitte 21, 22 an der Stirnseite 7 außerhalb des Statorkerns 5. Jeder Verbindungsabschnitt 23 weist zwei schräge Abschnitte 24, 25, die sich in einem Scheitel 26 des Verbindungsabschnitts 23 treffen, auf. Der schräge Abschnitt 24 ist mit dem ersten Beinabschnitt 21 verbunden. Der schräge Abschnitt 25 ist mit dem zweiten Beinabschnitt 22 verbunden. Die schrägen Abschnitt 24, 25 vergrößern jeweils ihren axialen Abstand zum Statorkern 5 vom Beinabschnitt 21, 22 zum Scheitel 26 hin. Wie in Fig. 2 zu erkennen ist, bilden die Verbindungsabschnitte 23 sowie an der Stirnseite 7 aus dem Statorkern 5 herausragende Abschnitte der Beinabschnitte 21, 22 den Wicklungskopf 10 aus.

Der weitere Wicklungskopf 11 wird durch an der weiteren Stirnseite 8 aus dem Statorkern 5 herausragende Abschnitte der Beinabschnitte 21, 22 ausgebildet. Dabei ist jeder Beinabschnitt 21, 22 mit einem Beinabschnitt 21, 22 eines anderen Formleiters 20 stoffschlüssig verbunden, sodass ein Strompfad zum Erzeugen eines magnetischen Drehfelds innerhalb des Statorkerns 5 ausgebildet ist.

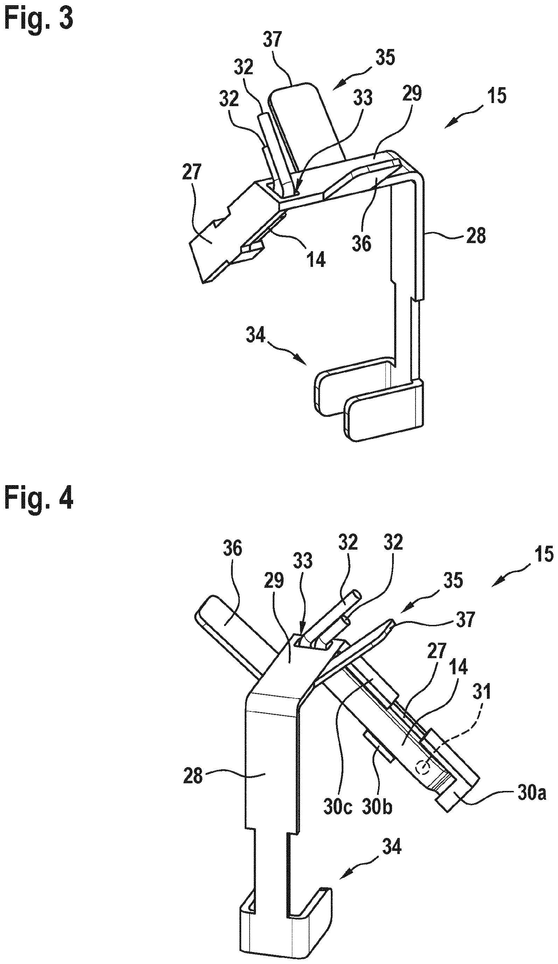

Fig. 3 und Fig. 4 zeigen jeweils eine perspektivische Einzelansicht der Befestigungsvorrichtung 15 und des Temperatursensors 14 gemäß dem ersten Ausführungsbeispiel in einem am Wicklungskopf 10 montierten Zustand, wobei der Wicklungskopf 10 und der Lagerschild 17 in Fig. 3 und Fig. 4 nicht dargestellt ist.

Die Befestigungsvorrichtung 15 weist einen ersten Schenkel 27, einen zweiten Schenkel 28 und einen Steg 29, der den ersten Schenkel 27 und den zweiten Schenkel 28 verbindet, auf. Exemplarisch ist die Befestigungsvorrichtung aus einem Kunststoff, insbesondere einem Thermoplast, gebildet.

Der erste Schenkel 27 haltert den Temperatursensor 14. Zum Haltern sind hier exemplarisch drei an einem Rand des ersten Schenkels 27 ausgebildete Halteelemente 30a, 30b, 30c vorgesehen. Der Temperatursensor 14 weist hier exemplarisch einen rein schematisch gezeigten Fühler 31 mit einer wärmeleitfähigen Einfassung, beispielsweise einer Vergussmasse oder einem Schrumpfschlauch, auf. Der Fühler umfasst beispielsweise ein NTC-Widerstand. Daneben sind in Fig. 3 und Fig. 4 optionale Sensorleitungen 32 des Temperatursensors 14 dargestellt, über die vom Fühler 31 erzeugte Sensorsignale übertragbar sind. Die Sensorleitungen 32 sind durch eine Durchgangsöffnung 33 im Steg 29 hindurchgeführt.

Außerdem weist die Befestigungsvorrichtung in diesem Ausführungsbeispiel eine Zentriervorrichtung 34 am zweiten Schenkel 28 sowie ein Lagerelement 35, das durch zwei winklig vom Steg 29 in Umfangsrichtung abstehende Flügel 36, 37 ausgebildet ist, auf.

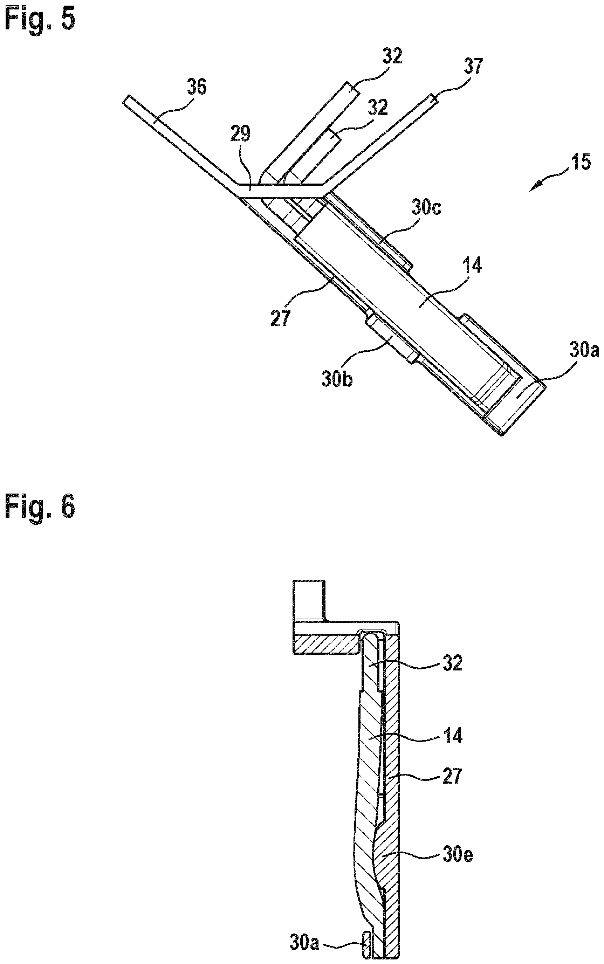

Fig. 5 und Fig. 6 sind jeweils eine Detailansicht des ersten Schenkels und des Temperatursensors gemäß dem ersten Ausführungsbeispiel, wobei Fig. 5 eine Draufsicht ist und Fig. 6 eine Schnittdarstellung ist.

Das Halteelement 30a ist am dem Statorkern 5 zugewandten Ende des ersten Schenkels 27 angeordnet und umgreift dort den Temperatursensor 14. Die Haltelemente 30b und 30c fassen den Temperatursensor 14 beidseitig ein, um dessen Bewegung quer zur Erstreckungsrichtung des ersten Schenkels 27 zu hemmen. Der Temperatursensor 14wird zusätzlich durch die Durchführung der Sensorleitungen 32 durch die Durchgangsöffnung 33 gehaltert. Wie in Fig. 6 zu sehen ist, weist der erste Schenkel 27 ferner einen zum Wicklungskopf 10 hin weisende Vorsprung 30e auf, durch welchen der Temperatursensor zum Wicklungskopf 10 hin gebogen wird.

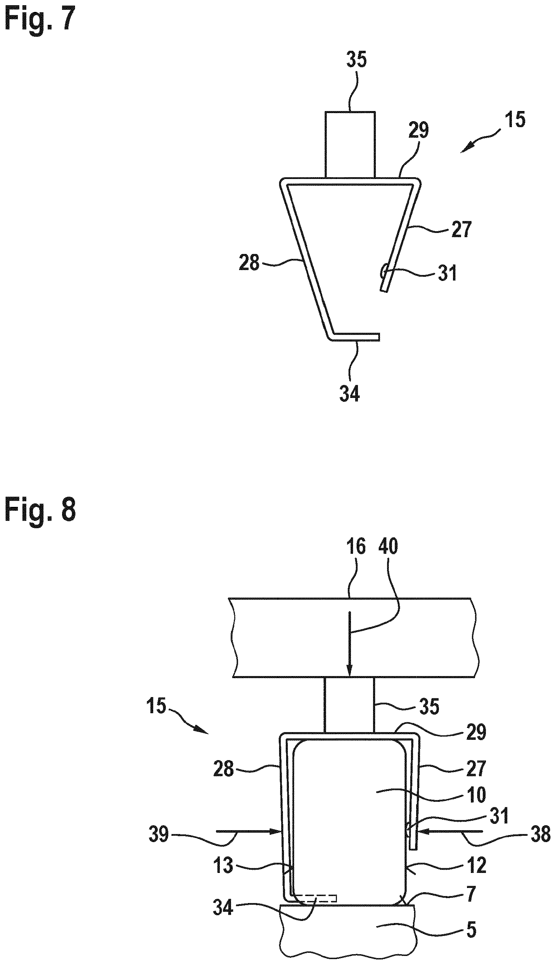

Fig. 7 und Fig. 8 sind jeweils eine Prinzipskizze der Befestigungsvorrichtung 15 gemäß dem ersten Ausführungsbeispiel, wobei Fig. 5 die Befestigungsvorrichtung 15 in einem unmontierten Zustand und Fig. 6 die Befestigungsvorrichtung 15 in einem am Wicklungskopf 10 montierten und am Lagerschild 16 abgestützten Zustand zeigt.

Im montierten Zustand ist der erste Schenkel 27 an der ersten Radialseite 12 angeordnet. Der zweite Schenkel 28 ist an der zweiten Radialseite 13 angeordnet. Der Steg 29 erstreckt sich radial entlang des Wicklungskopfs 10. Wie Fig. 7 und Fig. 8 zu entnehmen ist, ist der erste Schenkel 27 derart elastisch verformbar ausgebildet ist, dass er eine den Temperatursensor 14, von dem in Fig. 7 und Fig. 8 aus Gründen der Übersichtlichkeit nur der Fühler 31 dargestellt ist, an die erste Radialseite drückende Rückstellkraft ausübt. Die Rückstellkraft ist hier durch einen Pfeil 38 symbolisiert.

Zusätzlich ist auch der zweite Schenkel 28 derart elastisch verformbar ausgebildet ist, dass er eine radial auf den Wicklungskopf 10 wirkende Rückstellkraft, die durch einen Pfeil 39 symbolisiert ist, ausübt. In der gezeigten Anordnung wird eine Radialbewegung der Befestigungsvorrichtung 15 durch die von den Schenkeln 27, 28 ausgeübten Rückstellkräfte gehemmt.

Das Lagerelement 35 stützt sich am Lagerschild 16 ab und ist derart elastisch verformbar, dass es eine zum Statorkern 5 hin gerichtete Rückstellkraft, die durch einen Pfeil 40 symbolisiert ist, auf die Befestigungsvorrichtung 15 ausübt. Dabei schlägt die Befestigungsvorrichtung 15 mit dem Steg 29 an den Wicklungskopf 10 an, sodass eine Axialbewegung die Befestigungsvorrichtung 15 durch den Wicklungskopf 10 und den Lagerschild 16 gehemmt wird. Alternativ kann die Befestigungsvorrichtung 15 auch mit dem zweiten Schenkel 28 an den Statorkern 5 anschlagen, sodass die Axialbewegung durch den Statorkern 5 gehemmt wird.

Außerdem umgreift die Zentriervorrichtung 34 den Wicklungskopf 10 abschnittsweise und hemmt so eine Bewegung der Befestigungsvorrichtung 15 in Umfangsrichtung.

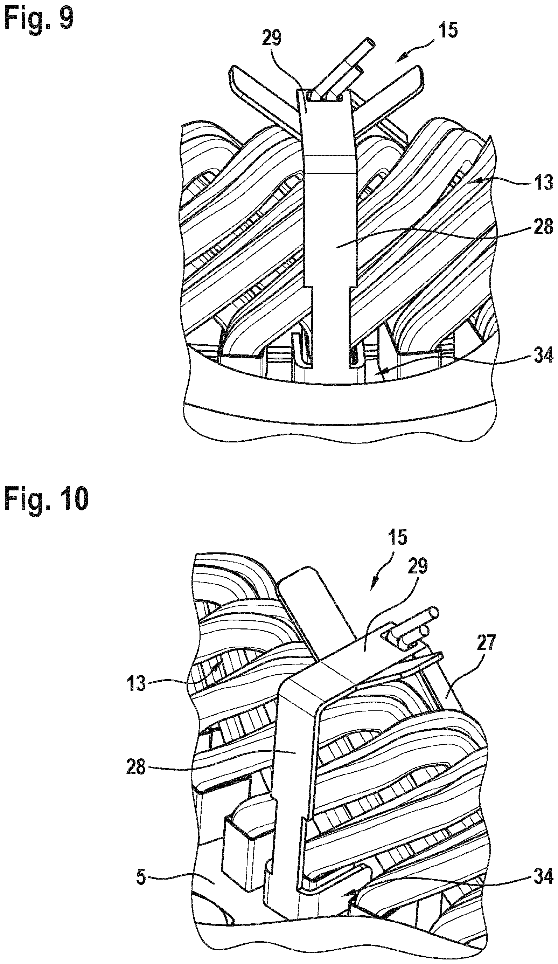

Fig. 9 bis 11 sind jeweils eine perspektivische Ansicht der Statorvorrichtung 2 gemäß dem ersten Ausführungsbeispiel im Bereich der sich im montierten Zustand befindenden Befestigungsvorrichtung 15, wobei der Lagerschild 16 aus Gründen der Übersichtlichkeit nicht dargestellt ist.

Insbesondere in Fig. 9 und Fig. 10 ist gut zu erkennen, dass die Zentriervorrichtung 34 gabelförmig ausgebildet ist und mehrere Beinabschnitte 21, 22, die in einer Nut des Statorkerns 5 angeordnet sind, zweiseitig umgreift. Dabei schlägt der zweite Schenkel 28 radial an die Beinabschnitte 21, 22 an.

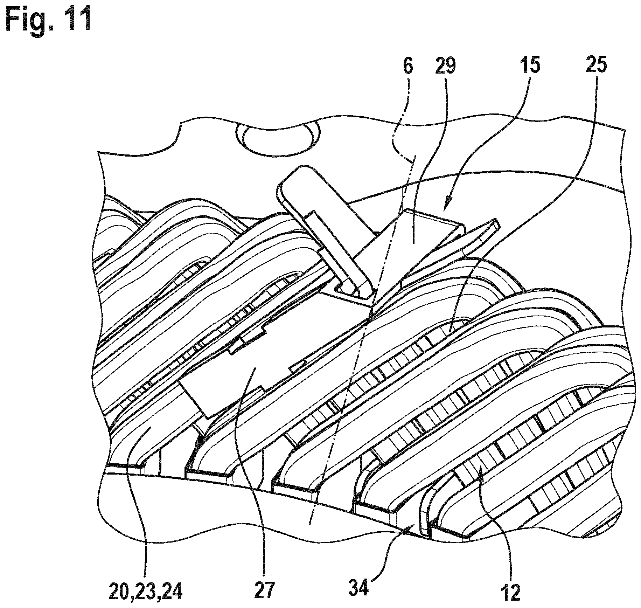

Wie am besten in Fig. 10 und Fig. 11 zu sehen ist, erstreckt sich erste Schenkel 27 weiter in Umfangsrichtung als der zweite Schenkel 28. Der erste Schenkel 27 steht winklig vom Steg 29 und verläuft bezüglich der Längsachse um ca. 45 Grad geneigt entlang der ersten Radialseite 12. Dabei verläuft der erste Schenkel 27 bzw. der von ihm gehalterte Temperatursensor 14 entlang eines schrägen Abschnitts 24 des Verbindungsabschnitts 23 eines der Formleiter 20. Dadurch können auch Toleranzen ausgeglichen werden.

Im Folgenden werden weitere Ausführungsbeispiele der Statorvorrichtung 2 beschrieben, die alternativ zum zuvor beschriebenen ersten Ausführungsbeispiel bei der elektrischen Maschine 1 zum Einsatz kommen können. Dabei lassen sich im Übrigen die Ausführungen zum ersten Ausführungsbeispiel auf die weiteren Ausführungsbeispiele übertragen. Gleiche oder gleichwirkende Komponenten sind mit identischen Bezugszeichen versehen:

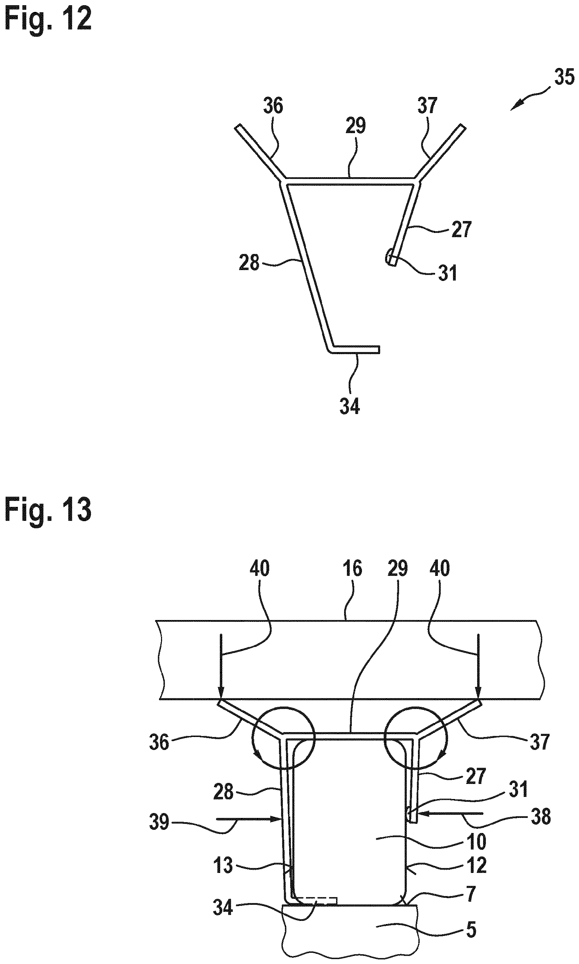

Fig. 12 und Fig. 13 sind jeweils eine Prinzipskizze der Befestigungsvorrichtung 15 gemäß einem zweiten Ausführungsbeispiel der Statorvorrichtung 2, wobei Fig. 12 die Befestigungsvorrichtung 15 im unmontierten Zustand und Fig. 13 die Befestigungsvorrichtung im am Wicklungskopf 10 montierten und am Lagerschild 16 abgestützten Zustand zeigt.

Beim zweiten Ausführungsbeispiel stehen die Flügel 36, 37 in Radialrichtung vom Steg 29 wegweisend ab. Da der erste Schenkel 27 gegenüber der ersten Radialseite 12 und der zweite Schenkel 28 gegenüber der zweiten Radialseite 13 in einem spitzen Winkel geneigt verlaufen, verstärkt die vom Lagerelement 35 ausgeübte Rückstellkraft (vgl. Pfeile 40) die von den Schenkeln 27, 28 ausgeübten Rückstellkräfte (vgl. Pfeile 38, 39).

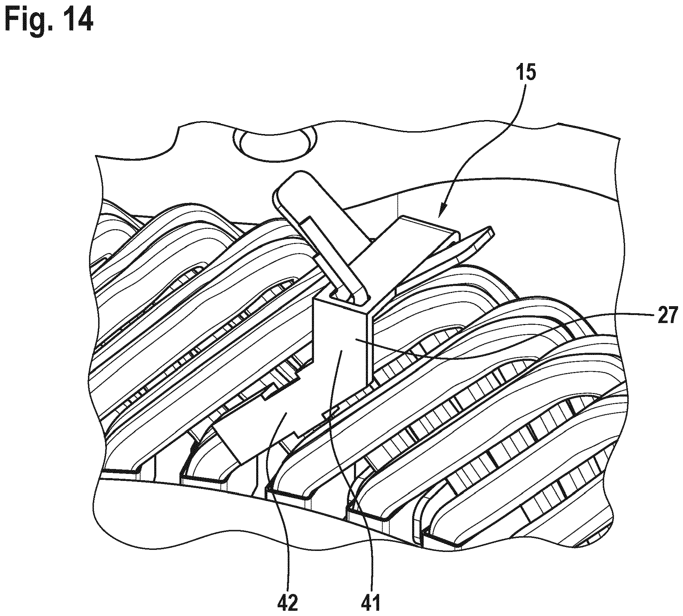

Fig. 14 ist eine perspektivische Ansicht der Befestigungsvorrichtung 15 gemäß einem dritten Ausführungsbeispiel der Statorvorrichtung 2 im montierten Zustand, wobei wie in Fig. 11 auf die Darstellung des Lagerschilds 16 verzichtet wurde.

Beim dritten Ausführungsbeispiel weist der erste Schenkel 27 einen ersten Schenkelabschnitt 41, der axial vom Steg absteht und einen sich an den ersten Schenkelabschnitt 41 anschließenden zweiten Schenkelabschnitt 42 auf. Der zweite Schenkelabschnitt 42 erstreckt sich weiter in Umfangsrichtung als der erste Schenkelabschnitt 41. Der Verlauf des zweiten Schenkelabschnitts 42 entspricht dabei dem Verlauf des ersten Schenkels 27 gemäß den vorangegangenen Ausführungsbeispielen, wobei durch den ersten Schenkelabschnitt ein axialer Versatz ausgebildet wird.

Gemäß einem weiteren Ausführungsbeispiel ist das Lagerelement 35 bei einer Statorvorrichtung 2 gemäß dem dritten Ausführungsbeispiel entsprechend dem zweiten Ausführungsbeispiel ausgebildet. Gemäß weiteren Ausführungsbeispielen ist die Statorwicklung 9 eine Runddrahtwicklung. Gemäß weiteren Ausführungsbeispielen ist die Befestigungsvorrichtung 15 aus einem Metall, beispielsweise aus Stahl, gebildet. Gemäß weiteren Ausführungsbeispielen liegt die erste Radialseite 12 außen und die zweite Radialseite 13 innen.

Gemäß einem weiteren Ausführungsbeispiel steht der erste Schenkel 27 senkrecht vom Steg 29 ab und/oder verläuft im Wesentlichen parallel zum zweiten Schenkel 28.

## Patentansprüche

1. Statorvorrichtung (2) für eine elektrische Maschine (1), aufweisend:
- einen Statorkern (5), der eine Längsachse (6) und eine axiale Stirnseite (7) aufweist;
- eine Statorwicklung (9), die an der Stirnseite (7) einen sich aus dem Statorkern (5) heraus erstreckenden Wicklungskopf (10) mit einer ersten Radialseite (12) und einer der ersten Radialseite (12) gegenüberliegenden zweiten Radialseite (13) ausbildet;
- einen Temperatursensor (14), der dazu eingerichtet ist, eine Temperatur an der ersten Radialseite (12) zu erfassen; und
- eine am Wicklungskopf (10) angeordnete Befestigungsvorrichtung (15), die
- einen ersten Schenkel (27), der an der ersten Radialseite (12) angeordnet ist und den Temperatursensor (14) haltert,
- einen zweiten Schenkel (28), der an der zweiten Radialseite (13) angeordnet ist, und
- einen Steg (29), der sich radial entlang des Wicklungskopfs (10) erstreckt und den ersten Schenkel (27) und den zweiten Schenkel (28) verbindet,
aufweist;
wobei der erste Schenkel (27) derart elastisch verformbar ausgebildet ist, dass er eine den Temperatursensor (14) an die erste Radialseite (12) drückende Rückstellkraft ausübt.

2. Statorvorrichtung nach Anspruch 1, wobei
sich der erste Schenkel (27) weiter in Umfangsrichtung erstreckt als der zweite Schenkel (28).

3. Statorvorrichtung nach Anspruch 1 oder 2, wobei
der erste Schenkel (27)
- winklig vom Steg (29) absteht oder
- einen ersten Schenkelabschnitt (41), der, insbesondere axial, vom Steg (29) absteht, und einen sich an den ersten Schenkelabschnitt (41) anschließenden zweiten Schenkelabschnitt (42), der sich weiter in Umfangsrichtung erstreckt als der erste Schenkelabschnitt (41), aufweist oder
- in Axialrichtung vom Steg (29) abstehend in Richtung des Statorkerns (5) verläuft.

4. Statorvorrichtung nach einem der vorhergehenden Ansprüche, wobei der erste Schenkel (27) bezüglich der Längsachse (6) um einen Winkel zwischen 20° und 70°, bevorzugt zwischen 30° und 60°, geneigt entlang der ersten Radialseite (12) verläuft.

5. Statorvorrichtung nach einem der vorhergehenden Ansprüche, wobei die Befestigungsvorrichtung (15) eine Zentriervorrichtung (34) aufweist, die dazu eingerichtet ist, den Wicklungskopf (10) abschnittsweise zu umgreifen, um eine Bewegung der Befestigungsvorrichtung (15) in Umfangsrichtung zu hemmen.

6. Statorvorrichtung nach Anspruch 5, wobei
die Zentriervorrichtung (34) am zweiten Schenkel (28), insbesondere an einem dem Statorkern (5) zugewandten Ende des zweiten Schenkels (28), angeordnet ist.

7. Statorvorrichtung nach einem der vorhergehenden Ansprüche, wobei der zweite Schenkel (28) derart elastisch verformbar ausgebildet ist, dass er eine radial auf den Wicklungskopf (10) wirkende Rückstellkraft ausübt.

8. Statorvorrichtung nach einem der vorhergehenden Ansprüche, ferner aufweisend
einen Lagerschild (16), wobei die Befestigungsvorrichtung (15) ein am Lagerschild (16) abgestütztes Lagerelement (35) aufweist, das derart elastisch verformbar ist, dass es eine zum Statorkern (5) hin gerichtete Rückstellkraft auf die Befestigungsvorrichtung (15) ausübt.

9. Statorvorrichtung nach Anspruch 8, wobei
das Lagerelement (35) durch zwei winklig vom Steg (29) abstehende Flügel (36, 37) ausgebildet ist.

10. Statorvorrichtung nach Anspruch 9, wobei
die Flügel (36, 37) in Umfangsrichtung oder in Radialrichtung vom Steg (29) wegweisend abstehen.

11. Statorvorrichtung nach einem der Ansprüche 8 bis 10,
wobei der erste Schenkel (27) gegenüber der ersten Radialseite (12) in einem spitzen Winkel geneigt verläuft und die vom Lagerelement (35) ausgeübte Rückstellkraft die vom ersten Schenkel (27) ausgeübten Rückstellkraft verstärkt.

12. Statorvorrichtung nach einem der Ansprüche 8 bis 11, wenn abhängig von Anspruch 7, wobei
der zweite Schenkel (28) gegenüber der zweiten Radialseite (13) in einem spitzen Winkel geneigt verläuft und die vom Lagerelement (35) ausgeübte Rückstellkraft die vom zweiten Schenkel (28) ausgeübte Rückstellkraft verstärkt.

13. Statorvorrichtung nach einem der vorhergehenden Ansprüche, wobei die Statorwicklung (9) aus einer Vielzahl von Formleitern (20) gebildet ist, die jeweils einen ersten Beinabschnitt (21), einen zweiten Beinabschnitt (22) und einen Verbindungabschnitt (23) aufweisen, wobei sich der erste Beinabschnitt (21) und der zweite Beinabschnitt (22) in Axialrichtung an verschiedenen Winkelpositionen in Umfangsrichtung durch den Statorkern (5) erstrecken und der Verbindungsabschnitt (23) die Beinabschnitte (21, 22) an der Stirnseite (5) außerhalb des Statorkerns (5) verbindet, wobei jeder Verbindungsabschnitt (23) zwei schräge Abschnitte (24, 25), die sich in einem Scheitel (26) des Verbindungsabschnitts (23) treffen, jeweils mit einem der Beinabschnitte (21, 22) verbunden sind und jeweils ihren axialen Abstand zum Statorkern (5) vom Beinabschnitt (21, 22) zum Scheitel (26) hin vergrößern, aufweist, wobei der Temperatursensor (14) und/oder der erste Schenkel (27) entlang eines der schrägen Abschnitte (24, 25) des Verbindungsabschnitts (23) eines der Formleiter (20) verläuft oder verlaufen.

14. Statorvorrichtung nach Anspruch 13, wenn abhängig von Anspruch 5, wobei
sich die Beinabschnitte (21, 22) an der Stirnseite (7) in Axialrichtung aus dem Statorkern (5) heraus erstrecken und die Zentriervorrichtung (34) einen der Beinabschnitte (21, 22) eines oder mehrerer der Formleiter (20) umgreift.

15. Elektrische Maschine (1) für ein Fahrzeug (100), aufweisend eine Statorvorrichtung (2) nach einem der vorhergehenden Ansprüche und einen drehbar bezüglich des Statorkerns (5) gelagerten Rotor (3).
